# EUROPÄISCHE PATENTANMELDUNG

(11) **EP 4 274 084 A1**
(43) Veröffentlichungstag der Anmeldung: **08.11.2023**
(21) Anmeldenummer: 23169728.5
(22) Anmeldetag: 25.04.2023
(51) Int. Cl.: H02P 5/747, H02P 3/22, H02P 5/69, H02P 3/12

(54) **ANTRIEBSSYSTEM**

(30) Priorität: 27.04.2022 DE 102022204092
(71) Anmelder: RENK GmbH, 86159 Augsburg (DE)
(72) Erfinder: STÖCKL, Thomas, 86571 Langenmosen (DE)
(74) Vertreter: Schlotter, Alexander Carolus Paul

(57) **Zusammenfassung**

Ein Antriebssystem zum Antreiben von einer und/oder durch eine angekoppelte Maschine (70) weist einen Abtrieb (51, 52) zum Antreiben von der und/oder durch die angekoppelte Maschine, eine erste Maschineneinheit mit wenigstens einer elektrischen Maschine (10) und eine zweite Maschineneinheit mit wenigstens einer elektrischen Maschine (20) auf. Die erste Maschineneinheit weist ein Übersetzungsgetriebe (11) und das Antriebssystemeine erste Schaltvorrichtung (12) auf, die derart eingerichtet ist, dass durch sie in einem ersten Betriebszustand der ersten Schaltvorrichtung das Übersetzungsgetriebe der ersten Maschineneinheit und der Abtrieb drehmomentübertragend wirkverbunden sind und in einem zweiten Betriebszustand der ersten Schaltvorrichtung diese Wirkverbindung unterbrochen ist. Zusätzlich oder alternativ weist das Antriebssystem eine erste Schalteinrichtung (14) auf, die derart eingerichtet ist, dass durch sie in einem ersten Betriebszustand der ersten Schalteinrichtung die elektrische Maschine (10; 20) der ersten oder zweiten Maschineneinheit und eine Energieversorgungs- und/oder Energiespeichereinrichtung (80) elektrisch verbunden sind und in einem zweiten Betriebszustand der ersten Schalteinrichtung diese Verbindung getrennt und ein aktiver Kurzschluss dieser elektrischen Maschine (10; 20) bewirkt ist.

## Beschreibung

Die vorliegende Erfindung betrifft ein Antriebssystem zum Antreiben von einer angekoppelten Maschine und/oder zum Antreiben durch eine angekoppelte Maschine, ein Maschinensystem mit dem Antriebssystem und der angekoppelten Maschine sowie ein Verfahren zum Betreiben des Maschinensystems.

Aus betriebsinterner Praxis sind sogenannte Mehrmotorenantriebe bekannt, bei denen mehrere Elektromotoren gemeinsam einen Abtrieb zum Antreiben einer angekoppelten Arbeitsmaschine antreiben. Auf diese Weise können mit kleinen Elektromotoren auch Arbeitsmaschinen mit hohen Antriebsleistungen angetrieben werden.

Aufgabe der vorliegenden Erfindung ist es, den Antrieb von einer Maschine und/oder durch eine Maschine zu verbessern.

Diese Aufgabe wird durch ein Antriebssystem mit den Merkmalen des Anspruchs 1 gelöst. Ansprüche 13, 14 stellen ein Maschinensystem mit einem hier beschriebenen Antriebssystem bzw. ein Verfahren zum Betreiben eines hier beschriebenen Maschinensystems unter Schutz. Die Unteransprüche betreffen vorteilhafte Weiterbildungen.

Nach einer Ausführung der vorliegenden Erfindung weist ein Antriebssystem einen Abtrieb, insbesondere Sammelabtrieb, in einer Ausführung ein Sammelgetriebe, auf, der bzw. das in wenigstens einem Betriebszustand eine angekoppelte Maschine, die (wenigstens dann bzw. in diesem Betriebszustand) als (angekoppelte) Arbeitsmaschine fungiert bzw. betrieben wird, antreibt und/oder in wenigstens einem Betriebszustand durch diese und/oder eine andere angekoppelte Maschine, die (wenigstens dann bzw. in diesem Betriebszustand) als (angekoppelte) Kraftmaschine fungiert bzw. betrieben wird, angetrieben wird, bzw. hierzu eingerichtet ist bzw. verwendet wird. Im ersten Fall stellt der Abtrieb einen Ausgang des Antriebssystems (zur angekoppelten Maschine) dar, im letzten Fall einen Ausgang der angekoppelten (Kraft)Maschine (zum Antriebssystem), er wird daher zur kompakteren Darstellung einheitlich als Abtrieb bezeichnet.

Der Abtrieb weist in einer Ausführung wenigstens ein Sammelzahnrad und/oder wenigstens eine, insbesondere damit gekoppelte, (Abtriebs)Welle auf. Hierdurch kann in einer Ausführung der Aufbau und/oder Betrieb, insbesondere Bauraum und/oder Wirkungsgrad, des Antriebssystem verbessert werden.

Nach einer Ausführung der vorliegenden Erfindung weist das Antriebssystem eine erste Maschineneinheit mit wenigstens einer (ersten) elektrischen Maschine und eine zweite Maschineneinheit mit wenigstens einer (zweiten) elektrischen Maschine auf.

In einer Ausführung treibt die (erste) elektrische Maschine der ersten Maschineneinheit in einem motorischen Betriebszustand dieser ersten elektrischen Maschine den Abtrieb an bzw. wird hierzu verwendet bzw. ist hierzu eingerichtet. Zusätzlich oder alternativ treibt in einer Ausführung die (zweite) elektrische Maschine der zweiten Maschineneinheit in einem motorischen Betriebszustand dieser zweiten elektrischen Maschine den Abtrieb an bzw. wird hierzu verwendet bzw. ist hierzu eingerichtet. Zusätzlich oder alternativ wird in einer Ausführung die (erste) elektrische Maschine der ersten Maschineneinheit in einem generatorischen Betriebszustand dieser ersten elektrischen Maschine von dem bzw. durch den Abtrieb angetrieben bzw. wird hierzu verwendet bzw. ist hierzu eingerichtet. Zusätzlich oder alternativ wird in einer Ausführung die (zweite) elektrische Maschine der zweiten Maschineneinheit in einem generatorischen Betriebszustand dieser zweiten elektrischen Maschine von dem bzw. durch den Abtrieb angetrieben bzw. wird hierzu verwendet bzw. ist hierzu eingerichtet.

In einer Weiterbildung weist das Antriebssystem eine oder vorzugsweise mehrere weitere Maschineneinheiten mit je wenigstens einer (weiteren) elektrischen Maschine auf.

In einer Ausführung treibt bei der bzw. einer oder mehrerer der weiteren Maschineneinheit(en) deren jeweils wenigstens eine weitere elektrische Maschine in einem motorischen Betriebszustand der jeweiligen weiteren elektrischen Maschine jeweils den Abtrieb an bzw. wird hierzu verwendet bzw. ist hierzu eingerichtet. Zusätzlich oder alternativ wird in einer Ausführung bei der bzw. einer oder mehrerer der weiteren Maschineneinheit(en) deren jeweils wenigstens eine weitere elektrische Maschine in einem generatorischen Betriebszustand der jeweiligen weiteren elektrischen Maschine jeweils von dem bzw. durch den Abtrieb angetrieben bzw. wird hierzu verwendet bzw. ist hierzu eingerichtet.

Dadurch können in einer Ausführung vorteilhaft auch große Antriebsleistungen bzw. elektrische Leistungen mit verhältnismäßig kleinen elektrischen Maschinen realisiert bzw. umgesetzt werden.

In einer Ausführung weisen die erste und zweite elektrische Maschine und/oder die erste und wenigstens eine weitere elektrische Maschine und/oder die zweite und wenigstens eine weitere elektrische Maschine die gleiche Nennleistung auf. Hierdurch können in einer Ausführung diese elektrischen Maschinen im Teillastbetrieb vorteilhaft alternierend verwendet und dadurch geschont werden.

In einer Ausführung weisen die erste und zweite elektrische Maschine und/oder die erste und wenigstens eine weitere elektrische Maschine und/oder die zweite und wenigstens eine weitere elektrische Maschine jeweils unterschiedliche Nennleistungen auf. Hierdurch können in einer Ausführung im Teillastbetrieb gezielt jeweils besonders geeignete elektrische Maschinen verwendet und dadurch der Wirkungsgrad verbessert werden.

Nach einem ersten Aspekt der vorliegenden Erfindung weist die erste Maschineneinheit ein (erstes) Übersetzungsgetriebe auf, das durch die (erste, insbesondere motorisch betriebene) elektrische Maschine der ersten Maschineneinheit wenigstens temporär angetrieben wird und/oder die (erste, insbesondere generatorisch betriebene) elektrische Maschine der ersten Maschineneinheit wenigstens temporär antreibt bzw. hierzu verwendet wird bzw. eingerichtet ist, und das Antriebssystem (weist) eine erste, in einer Ausführung mechanische, Schaltvorrichtung (auf), die derart bzw. dazu eingerichtet ist, dass durch sie
- in einem ersten Betriebszustand der ersten Schaltvorrichtung das Übersetzungsgetriebe der ersten Maschineneinheit und der Abtrieb drehmomentübertragend wirkverbunden sind; und
- in einem zweiten Betriebszustand der ersten Schaltvorrichtung diese Wirkverbindung zwischen dem Übersetzungsgetriebe der ersten Maschineneinheit und dem Abtrieb unterbrochen ist.

In einer Weiterbildung dieses ersten Aspekts weist die zweite Maschineneinheit ein (zweites) Übersetzungsgetriebe auf, das durch die (zweite, insbesondere motorisch betriebene) elektrische Maschine der zweiten Maschineneinheit wenigstens temporär angetrieben wird und/oder die (zweite, insbesondere generatorisch betriebene) elektrische Maschine der zweiten Maschineneinheit wenigstens temporär antreibt bzw. hierzu verwendet wird bzw. eingerichtet ist, und das Antriebssystem (weist) eine zweite, in einer Ausführung mechanische, Schaltvorrichtung (auf), die derart bzw. dazu eingerichtet ist, dass durch sie
- in einem ersten Betriebszustand der zweiten Schaltvorrichtung das Übersetzungsgetriebe der zweiten Maschineneinheit und der Abtrieb drehmomentübertragend wirkverbunden sind; und
- in einem zweiten Betriebszustand der zweiten Schaltvorrichtung diese Wirkverbindung zwischen dem Übersetzungsgetriebe der zweiten Maschineneinheit und dem Abtrieb unterbrochen ist.

In einer Ausführung weist die bzw. eine oder mehrere der weitere(n) Maschineneinheit(en) je ein (weiteres) Übersetzungsgetriebe auf, das durch die (weitere, insbesondere motorisch betriebene) elektrische Maschine der (jeweiligen) weiteren Maschineneinheit wenigstens temporär angetrieben wird und/oder die (weitere, insbesondere generatorisch betriebene) elektrische Maschine der (jeweiligen) weiteren Maschineneinheit wenigstens temporär antreibt bzw. hierzu verwendet wird bzw. eingerichtet ist, und das Antriebssystem (weist) eine oder vorzugsweise mehrere weitere, in einer Ausführung mechanische, Schaltvorrichtung(en) (auf), die derart bzw. dazu eingerichtet ist/sind, dass durch sie
- in einem ersten Betriebszustand der (jeweiligen) weiteren Schaltvorrichtung das Übersetzungsgetriebe der bzw. einer der weiteren Maschineneinheit(en) und der Abtrieb drehmomentübertragend wirkverbunden sind; und
- in einem zweiten Betriebszustand dieser weiteren Schaltvorrichtung diese Wirkverbindung zwischen dem Übersetzungsgetriebe dieser weiteren Maschineneinheit und dem Abtrieb unterbrochen ist.

In einer Ausführung ist somit jeder von mehreren weiteren Maschineneinheiten jeweils eine (der) weitere(n) Schaltvorrichtung(en) bijektiv zugeordnet, durch die in einem ersten Betriebszustand der jeweiligen weiteren Schaltvorrichtung das Übersetzungsgetriebe der zugeordneten (der) weiteren Maschineneinheit(en) und der Abtrieb drehmomentübertragend wirkverbunden sind und in einem zweiten Betriebszustand dieser weiteren Schaltvorrichtung diese Wirkverbindung zwischen dem Übersetzungsgetriebe dieser zugeordneten (der) weiteren Maschineneinheit(en) und dem Abtrieb unterbrochen ist.

Hierdurch können in einer Ausführung vorteilhaft (Getriebe)Elemente der Maschineneinheit(en), in einer Weiterbildung solche, die bei Betrieb höhere Drehzahlen aufweisen, bei Nichtbedarf, einem Defekt oder dergleichen temporär abgekoppelt und dadurch insbesondere Reibungsverluste durch bzw. an diesen Elementen bzw. deren Lagern reduziert und so der Betrieb, insbesondere Wirkungsgrad, des Antriebssystem verbessert werden. Vorzugsweise können so schnelle(re) und/oder kompakte(re) elektrische Maschinen verwendet und so der Aufbau, insbesondere Bauraum, reduziert, und dabei trotzdem Reibungsverluste gering gehalten werden. Zusätzlich oder alternativ kann hierdurch in einer Ausführung die Sicherheit erhöht werden, indem bei einem Störfall die Wirkverbindung zwischen diesen Elementen und dem Abtrieb unterbrochen wird.

Nach einem zweiten Aspekt der vorliegenden Erfindung weist das Antriebssystem zusätzlich oder alternativ zu dem vorgenannten ersten Aspekt der Schaltvorrichtung(en) eine erste, insbesondere elektrische, Schalteinrichtung auf, die derart bzw. dazu eingerichtet ist, dass durch sie
i)
   - in einem ersten Betriebszustand der ersten Schalteinrichtung die elektrische Maschine der *ersten* Maschineneinheit und eine Energieversorgungs- und/oder Energiespeichereinrichtung elektrisch verbunden sind; und
   - in einem zweiten Betriebszustand der ersten Schalteinrichtung diese Verbindung mit der Energieversorgungs- und/oder Energiespeichereinrichtung getrennt und ein aktiver Kurzschluss dieser elektrischen Maschine der *ersten* Maschineneinheit bewirkt ist, insbesondere wird; oder
ii)
   - in einem ersten Betriebszustand der ersten Schalteinrichtung die elektrische Maschine der *zweiten* Maschineneinheit und eine Energieversorgungs- und/oder Energiespeichereinrichtung elektrisch verbunden sind; und
   - in einem zweiten Betriebszustand der ersten Schalteinrichtung diese Verbindung mit der Energieversorgungs- und/oder Energiespeichereinrichtung getrennt und ein aktiver Kurzschluss dieser elektrischen Maschine der *zweiten* Maschineneinheit bewirkt ist, insbesondere wird.

In einer Weiterbildung dieses zweiten Aspekts weist das Antriebssystem eine zweite, insbesondere elektrische, Schalteinrichtung auf, die derart bzw. dazu eingerichtet ist, dass durch sie
im obigen Fall i)
   - in einem ersten Betriebszustand der zweiten Schalteinrichtung die elektrische Maschine der *zweiten* Maschineneinheit und eine Energieversorgungs- und/oder Energiespeichereinrichtung elektrisch verbunden sind; und
   - in einem zweiten Betriebszustand der zweiten Schalteinrichtung diese Verbindung mit der Energieversorgungs- und/oder Energiespeichereinrichtung getrennt und ein aktiver Kurzschluss dieser elektrischen Maschine der *zweiten* Maschineneinheit bewirkt ist, insbesondere wird; oder
im obigen Fall ii)
   - in einem ersten Betriebszustand der zweiten Schalteinrichtung die elektrische Maschine der *ersten* Maschineneinheit und eine Energieversorgungs- und/oder Energiespeichereinrichtung elektrisch verbunden sind; und
   - in einem zweiten Betriebszustand der zweiten Schalteinrichtung diese Verbindung mit der Energieversorgungs- und/oder Energiespeichereinrichtung getrennt und ein aktiver Kurzschluss dieser elektrischen Maschine der *ersten* Maschineneinheit bewirkt ist, insbesondere wird.

In einer Ausführung weist das Antriebssystem eine oder vorzugsweise mehrere weitere, insbesondere elektrische, Schalteinrichtung(en) auf, die derart bzw. dazu eingerichtet ist/sind, dass durch sie
- in einem ersten Betriebszustand der (jeweiligen) weiteren Schalteinrichtung die elektrische Maschine der bzw. einer der weiteren Maschineneinheit(en) und eine Energieversorgungs- und/oder Energiespeichereinrichtung elektrisch verbunden sind; und
- in einem zweiten Betriebszustand dieser weiteren Schalteinrichtung diese Verbindung mit der Energieversorgungs- und/oder Energiespeichereinrichtung getrennt und ein aktiver Kurzschluss dieser elektrischen Maschine der weiteren Maschineneinheit bewirkt ist, insbesondere wird.

In einer Ausführung ist somit jeder von mehreren weiteren Maschineneinheiten jeweils eine (der) weitere(n) Schalteinrichtung(en) bijektiv zugeordnet, durch die in einem ersten Betriebszustand der jeweiligen weiteren Schalteinrichtung die elektrische Maschine der zugeordneten (der) weiteren Maschineneinheit(en) und eine Energieversorgungs- und/oder Energiespeichereinrichtung elektrisch verbunden sind und in einem zweiten Betriebszustand dieser weiteren Schaltvorrichtung diese Verbindung mit der Energieversorgungs- und/oder Energiespeichereinrichtung getrennt und ein aktiver Kurzschluss dieser elektrischen Maschine von der weiteren Maschineneinheit bewirkt ist, insbesondere wird.

Leer mitdrehende elektrische Maschinen können eine Spannung an ihren Anschlussklemmen induzieren. Mit einem sogenannten aktiven Kurzschluss (AKS) kann diese Spannungsinduktion in einer Ausführung vorteilhaft vermieden bzw. reduziert werden. Die Verlustleistung einer leer mitgeschleppten elektrischen Maschine ist vorteilhafterweise gering. Daher können nach dem zweiten Aspekt in einer Ausführung vorteilhaft elektrische Maschinen bei Nichtbedarf verlustarm "weggeschaltet" bzw. "mitgeschleppt" und so der Betrieb, insbesondere Wirkungsgrad, des Antriebssystem verbessert werden. Zusätzlich oder alternativ kann hierdurch in einer Ausführung die Sicherheit erhöht werden, indem bei einem Störfall ein aktiver Kurzschluss bewirkt wird.

Der erste und zweite Aspekt können jeweils alleine realisiert werden bzw. sein, sie, insbesondere vorteilhafte Weiterbildungen, werden daher hier teilweise eigenständig erläutert. Gleichermaßen können in einer Ausführung der erste und zweite Aspekt auch miteinander kombiniert sein bzw. werden, so dass die Erläuterungen gleichermaßen auch für diese Kombination(en) gelten.

In einer Ausführung sind der erste und zweite Aspekt miteinander kombiniert, in einer Weiterbildung indem
I) eine oder mehrere der hier genannten Maschineneinheiten (jeweils) ein Übersetzungsgetriebe und das Antriebssystem (jeweils) eine Schaltvorrichtung aufweisen, wobei in einem ersten Betriebszustand dieser Schaltvorrichtung dieses Übersetzungsgetriebe und der Abtrieb drehmomentübertragend wirkverbunden sind und in einem zweiten Betriebszustand dieser Schaltvorrichtung diese Wirkverbindung unterbrochen ist, und zusätzlich die elektrische Maschine von dieser bzw. einer oder mehreren dieser Maschineneinheit(en) und eine Energieversorgungs- und/oder Energiespeichereinrichtung (jeweils) in einem ersten Betriebszustand einer Schalteinrichtung elektrisch verbunden sind und in einem zweiten Betriebszustand dieser Schalteinrichtung diese Schalteinrichtung diese Verbindung trennt und einen aktiven Kurzschluss dieser elektrischen Maschine bewirkt; und/oder
II) eine oder mehrere der hier genannten Maschineneinheiten (jeweils) ein Übersetzungsgetriebe und das Antriebssystem (jeweils) eine Schaltvorrichtung aufweisen, wobei in einem ersten Betriebszustand dieser Schaltvorrichtung dieses Übersetzungsgetriebe und der Abtrieb drehmomentübertragend wirkverbunden sind und in einem zweiten Betriebszustand dieser Schaltvorrichtung diese Wirkverbindung unterbrochen ist, und zusätzlich eine oder mehrere andere der hier genannten Maschineneinheiten (jeweils) kein Übersetzungsgetriebe und/oder keine Schaltvorrichtung zum Unterbrechen einer Wirkverbindung eines Übersetzungsgetriebes dieser Maschineneinheit und dem Abtrieb aufweisen, wobei die elektrische Maschine von dieser bzw. einer oder mehreren dieser anderen Maschineneinheiten und eine Energieversorgungs- und/oder Energiespeichereinrichtung (jeweils) in einem ersten Betriebszustand einer Schalteinrichtung durch diese elektrisch verbunden sind und in einem zweiten Betriebszustand dieser Schalteinrichtung diese Schalteinrichtung diese Verbindung trennt und einen aktiven Kurzschluss dieser elektrischen Maschine bewirkt.

Mit anderen Worten können in einer Ausführung eine oder mehrere Maschineneinheiten vorgesehen sein, die nur ein Übersetzungsgetriebe und eine Schaltvorrichtung zur Unterbrechung der Wirkverbindung zwischen Übersetzungsgetriebe und Abtrieb aufweisen, ohne dass das Antriebssystem (eine) Schalteinrichtung(en) zum Bewirken eines aktiven Kurzschlusses der elektrischen Maschine dieser Maschineneinheiten aufweist. Zusätzlich oder alternativ können in einer Ausführung (eine) Schalteinrichtung(en) zum Bewirken eines aktiven Kurzschlusses einer elektrischen Maschine einer oder mehrerer Maschineneinheiten vorgesehen sein, ohne dass diese Maschineneinheiten eine Schaltvorrichtung zur Unterbrechung der Wirkverbindung zwischen einem Übersetzungsgetriebe und Abtrieb aufweisen, wobei eine oder mehrerer dieser Maschineneinheiten jeweils ein mit dem Abtrieb drehmomentübertragend wirkverbundenes Übersetzungsgetriebe aufweisen und/oder eine oder mehrerer dieser Maschineneinheiten kein solches mit dem Abtrieb drehmomentübertragend wirkverbundenes Übersetzungsgetriebe aufweisen. Zusätzlich oder alternativ können in einer Ausführung eine oder mehrere Maschineneinheiten vorgesehen sein, die jeweils ein Übersetzungsgetriebe und eine Schaltvorrichtung zur Unterbrechung der Wirkverbindung zwischen diesem Übersetzungsgetriebe und dem Abtrieb aufweisen, wobei das Antriebssystem eine bzw. mehrere Schalteinrichtung(en) zum Bewirken eines aktiven Kurzschlusses der elektrischen Maschine dieser Maschineneinheit(en) aufweist.

Indem für eine oder mehrere Maschineneinheiten in einer Ausführung sowohl eine Schaltvorrichtung als auch eine Schalteinrichtung vorgesehen bzw. eingerichtet sind, kann in einer Ausführung vorteilhafterweise die Schaltvorrichtung die Wirkverbindung zwischen Übersetzungsgetriebe und Abtrieb unterbrechen oder die Schalteinrichtung den aktiven Kurzschluss der elektrischen Maschine bewirken, insbesondere wahlweise und/oder bei einer Fehlfunktion der Schaltvorrichtung. Dadurch kann in einer Ausführung die Sicherheit erhöht bzw. eine redundante Möglichkeit zum "Wegschalten" der elektrischen Maschine zur Verfügung gestellt werden. Indem für eine oder mehrere Maschineneinheiten in einer Ausführung nur eine Schalteinrichtung, aber keine Schaltvorrichtung zum Unterbrechen einer Wirkverbindung zwischen einem eventuell vorhandenen Übersetzungsgetriebe und dem Abtrieb vorgesehen bzw. eingerichtet ist, können in einer Ausführung vorteilhaft der konstruktive Aufwand reduziert und/oder das Antriebssystem kompakt(er) ausgebildet werden. Indem für eine oder mehrere Maschineneinheiten in einer Ausführung nur eine Schaltvorrichtung zum Unterbrechen einer Wirkverbindung zwischen Übersetzungsgetriebe und Abtrieb, aber keine Schalteinrichtung vorgesehen bzw. eingerichtet ist, kann in einer Ausführung vorteilhaft elektrotechnischer Aufwand reduziert und/oder das Antriebssystem einfach(er) gesteuert werden.

In einer Ausführung ist das Antriebssystem derart bzw. dazu eingerichtet, dass in wenigstens einem Betriebszustand, vorzugsweise einem Volllast-Betriebszustand, des Antriebssystems
- die erste Schaltvorrichtung ihren ersten Betriebszustand und/oder
- die erste Schalteinrichtung ihren ersten Betriebszustand aufweist, in einer Weiterbildung zusätzlich
- die zweite und/oder die bzw. eine oder mehrere der weitere(n) Schaltvorrichtung(en jeweils) ihren ersten Betriebszustand und/oder
- die zweite und/oder die bzw. eine oder mehrere der weitere(n) Schalteinrichtung(en jeweils) ihren ersten Bestriebszustand aufweist bzw. aufweisen.

Nach einer Ausführung der vorliegenden Erfindung weist in einem Verfahren zum Betreiben eines hier beschriebenen Maschinensystems in einem Betriebszustand des Antriebssystems, insbesondere in einem Volllast-Betriebszustand, der ohne Beschränkung der Allgemeinheit als Motor-Betriebszustand bezeichnet wird,
- die erste Schaltvorrichtung ihren ersten Betriebszustand und/oder
- die erste Schalteinrichtung ihren ersten Betriebszustand auf, in einer Weiterbildung zusätzlich
- die zweite und/oder die bzw. eine oder mehrere der weitere(n) Schaltvorrichtung(en jeweils) ihren ersten Betriebszustand und/oder
- die zweite und/oder die bzw. eine oder mehrere der weitere(n) Schalteinrichtung(en jeweils) ihren ersten Betriebszustand
auf, wobei
in diesem Betriebszustand des Antriebssystems die elektrische Maschine der ersten Maschineneinheit und die elektrische Maschine der zweiten Maschineneinheit sowie gegebenenfalls die elektrische Maschine der weiteren Maschineneinheit den Abtrieb (gemeinsam) antreiben.

In einer Ausführung wird zum Umschalten von diesem einen Motor-Betriebszustand in einen anderen Motor-Betriebszustand des Antriebssystems, insbesondere einen Teillast-Betriebszustand, in dem weiterhin eine oder mehrere der Maschineneinheiten den Abtrieb antreiben, wenigstens eine der Schaltvorrichtungen von ihrem ersten in ihren zweiten Betriebszustand und/oder wenigstens eine der Schalteinrichtungen von ihrem ersten in ihren zweiten Betriebszustand überführt.

In einer Weiterbildung wird zum Umschalten von diesem einen oder diesem anderen Motor-Betriebszustand in einen zusätzlichen Motor-Betriebszustand des Antriebssystems, insbesondere einen Teillast-Betriebszustand, in dem eine oder mehrere der Maschineneinheiten den Abtrieb antreiben, wenigstens eine andere der Schaltvorrichtungen von ihrem ersten in ihren zweiten Betriebszustand und/oder wenigstens eine andere der Schalteinrichtungen von ihrem ersten in ihren zweiten Betriebszustand überführt.

Zusätzlich oder alternativ weist nach einer Ausführung der vorliegenden Erfindung in einem Verfahren zum Betreiben eines hier beschriebenen Maschinensystems in einem Betriebszustand des Antriebssystems, insbesondere in einem Volllast-Betriebszustand, der ohne Beschränkung der Allgemeinheit als Generator-Betriebszustand bezeichnet wird,
- die erste Schaltvorrichtung ihren ersten Betriebszustand und/oder
- die erste Schalteinrichtung ihren ersten Betriebszustand
   auf, in einer Weiterbildung zusätzlich
- die zweite und/oder die bzw. eine oder mehrere der weitere(n) Schaltvorrichtung(en jeweils) ihren ersten Betriebszustand und/oder
- die zweite und/oder die bzw. eine oder mehrere der weitere(n) Schalteinrichtung(en jeweils) ihren ersten Betriebszustand
auf, wobei
in diesem Betriebszustand des Antriebssystems die elektrische Maschine der ersten Maschineneinheit und die elektrische Maschine der zweiten Maschineneinheit sowie gegebenenfalls die elektrische Maschine der weiteren Maschineneinheit von dem Abtrieb (gemeinsam) angetrieben werden.

In einer Ausführung wird zum Umschalten von diesem einen Generator-Betriebszustand in einen anderen Generator-Betriebszustand des Antriebssystems, insbesondere einen Teillast-Betriebszustand, in dem eine oder mehrere der Maschineneinheiten durch den Abtrieb angetrieben werden, wenigstens eine der Schaltvorrichtungen von ihrem ersten in ihren zweiten Betriebszustand und/oder wenigstens eine der Schalteinrichtungen von ihrem ersten in ihren zweiten Betriebszustand überführt.

In einer Weiterbildung wird zum Umschalten von diesem einen oder diesem anderen Generator-Betriebszustand in einen zusätzlichen Generator-Betriebszustand, in dem eine oder mehrere der Maschineneinheiten durch den Abtrieb angetrieben werden, wenigstens eine andere der Schaltvorrichtungen von ihrem ersten in ihren zweiten Betriebszustand und/oder wenigstens eine andere der Schalteinrichtungen von ihrem ersten in ihren zweiten Betriebszustand überführt.

Hierdurch kann in einer Ausführung vorteilhaft bedarfsweise bzw. temporär eine hohe Antriebsleistung zum Antreiben der angekoppelten Maschine realisiert bzw. eine hohe Antriebsleistung der angekoppelten Maschine in elektrische Leistung umgesetzt werden, und zwar jeweils vorteilhafterweise mit kompakte(re)n elektrischen Maschinen.

In einer Ausführung werden einer oder mehrere der nachfolgen aufgelisteten Betriebszustände, insbesondere Teillast-Betriebszustände, des Antriebssystems durchgeführt bzw. ist das Antriebssystem hierzu eingerichtet, ohne dass diese Auflistung als abschließend zu verstehen ist:
- die elektrische Maschine der ersten Maschineneinheit treibt den Abtrieb an, die elektrische Maschine der *zweiten* Maschineneinheit treibt den Abtrieb *nicht* an, in einer Ausführung treiben die elektrische Maschine der ersten Maschineneinheit und die elektrische Maschine der weiteren Maschineneinheit den Abtrieb gemeinsam an und die elektrische Maschine der zweiten Maschineneinheit treibt den Abtrieb nicht an. Hierzu weist erste Schaltvorrichtung (falls vorhanden) ihren ersten Betriebszustand auf, die wenigstens eine weitere Schaltvorrichtung (falls vorhanden) weist ebenfalls ihren ersten Betriebszustand auf. Durch die erste oder zweite Schalteinrichtung (falls vorhanden) sind die elektrische Maschine der ersten Maschineneinheit und eine Energieversorgungs- und/oder Energiespeichereinrichtung elektrisch verbunden, durch die weitere Schalteinrichtung (falls vorhanden) sind die elektrische Maschine der weiteren Maschineneinheit (falls vorhanden) und eine Energieversorgungs- und/oder Energiespeichereinrichtung elektrisch verbunden. Die *zweite* Schaltvorrichtung (falls vorhanden) weist ihren *zweiten* Betriebszustand auf und/oder durch die erste oder zweite Schalteinrichtung (falls vorhanden) wird ein aktiver Kurzschluss der elektrischen Maschine der *zweiten* Maschineneinheit bewirkt.
- Die elektrische Maschine der *ersten* Maschineneinheit treibt den Abtrieb *nicht* an, die elektrische Maschine der zweiten Maschineneinheit treibt den Abtrieb an, in einer Ausführung treiben die elektrische Maschine der zweiten Maschineneinheit und die elektrische Maschine der weiteren Maschineneinheit den Abtrieb gemeinsam an und die elektrische Maschine der ersten Maschineneinheit treibt den Abtrieb nicht an. Hierzu weist zweite Schaltvorrichtung (falls vorhanden) ihren ersten Betriebszustand auf, die wenigstens eine weitere Schaltvorrichtung (falls vorhanden) weist ebenfalls ihren ersten Betriebszustand auf. Durch die erste oder zweite Schalteinrichtung (falls vorhanden) sind die elektrische Maschine der zweiten Maschineneinheit und eine Energieversorgungs- und/oder Energiespeichereinrichtung elektrisch verbunden, durch die weitere Schalteinrichtung (falls vorhanden) sind die elektrische Maschine der weiteren Maschineneinheit (falls vorhanden) und eine Energieversorgungs- und/oder Energiespeichereinrichtung elektrisch verbunden. Die erste Schaltvorrichtung (falls vorhanden) weist ihren *zweiten* Betriebszustand auf und/oder durch die erste oder zweite Schalteinrichtung (falls vorhanden) wird ein aktiver Kurzschluss der elektrischen Maschine der *ersten* Maschineneinheit bewirkt.
- Die elektrische Maschine der ersten Maschineneinheit wird von dem Abtrieb angetrieben, in einer Ausführung werden die elektrische Maschine der ersten Maschineneinheit und die elektrische Maschine der weiteren Maschineneinheit gemeinsam von dem Abtrieb angetrieben. Hierzu weist erste Schaltvorrichtung (falls vorhanden) ihren ersten Betriebszustand auf, die wenigstens eine weitere Schaltvorrichtung (falls vorhanden) weist ebenfalls ihren ersten Betriebszustand auf. Durch die erste oder zweite Schalteinrichtung (falls vorhanden) sind die elektrische Maschine der ersten Maschineneinheit und eine Energieversorgungs- und/oder Energiespeichereinrichtung elektrisch verbunden, durch die weitere Schalteinrichtung (falls vorhanden) sind die elektrische Maschine der weiteren Maschineneinheit (falls vorhanden) und eine Energieversorgungs- und/oder Energiespeichereinrichtung elektrisch verbunden. Die *zweite* Schaltvorrichtung (falls vorhanden) weist ihren *zweiten* Betriebszustand auf und/oder durch die erste oder zweite Schalteinrichtung (falls vorhanden) wird eine elektrische Verbindung der elektrischen Maschine der *zweiten* Maschineneinheit mit einer Energieversorgungs- und/oder Energiespeichereinrichtung getrennt und ein aktiver Kurzschluss der elektrischen Maschine der zweiten Maschineneinheit bewirkt.
- Die elektrische Maschine der zweiten Maschineneinheit wird von dem Abtrieb angetrieben, in einer Ausführung werden die elektrische Maschine der zweiten Maschineneinheit und die elektrische Maschine der weiteren Maschineneinheit gemeinsam von dem Abtrieb angetrieben. Hierzu weist zweite Schaltvorrichtung (falls vorhanden) ihren ersten Betriebszustand auf, die wenigstens eine weitere Schaltvorrichtung (falls vorhanden) weist ebenfalls ihren ersten Betriebszustand auf. Durch die erste oder zweite Schalteinrichtung (falls vorhanden) sind die elektrische Maschine der zweiten Maschineneinheit und eine Energieversorgungs- und/oder Energiespeichereinrichtung elektrisch verbunden, durch die weitere Schalteinrichtung (falls vorhanden) sind die elektrische Maschine der weiteren Maschineneinheit (falls vorhanden) und eine Energieversorgungs- und/oder Energiespeichereinrichtung elektrisch verbunden. Die erste Schaltvorrichtung (falls vorhanden) weist ihren *zweiten* Betriebszustand auf und/oder durch die erste oder zweite Schalteinrichtung (falls vorhanden) wird eine elektrische Verbindung der elektrischen Maschine der *ersten* Maschineneinheit mit einer Energieversorgungs- und/oder Energiespeichereinrichtung getrennt und ein aktiver Kurzschluss der elektrischen Maschine der *ersten* Maschineneinheit bewirkt.

Durch Kombination der vorgenannten Betriebszustände können in einer Ausführung vorteilhaft jeweils situations-, insbesondere bedarfsgerecht bestimmte, besonders geeignete Maschineneinheiten bzw. elektrische Maschinen temporär genutzt und andere Maschineneinheiten bzw. elektrische Maschinen temporär nicht genutzt und dadurch in einer Ausführung Reibungsverluste durch bzw. an, insbesondere schnell(er)laufende(n), (Getriebe)Elementen bzw. deren Lagern reduziert und/oder bei einem Störfall Wirkverbindungen zu diesen Elementen unterbrochen und/oder elektrische Maschinen aktiv kurzgeschlossen und so der Betrieb, insbesondere der Wirkungsgrad und/oder die Sicherheit, des Antriebssystem verbessert werden.

Wie an anderer Stelle erwähnt, kann das Antriebssystem neben den drei vorstehend aufgeführten Maschineneinheiten (ohne Beschränkung der Allgemeinheit "erste", "zweite", "weitere") noch ein oder mehrere weitere Maschineneinheiten und entsprechende Schaltvorrichtungen und/oder Schalteinrichtungen aufweisen, wodurch in einer Ausführung vorteilhaft noch mehr Betriebszustände realisiert und dadurch der Betrieb (weiter) verbessert werden kann.

In einer Ausführung weisen eine oder mehrere der hier genannten Schaltvorrichtungen, insbesondere also die erste und/oder die zweite und/oder die bzw. eine oder mehrere der weitere(n) Schaltvorrichtung(en), (jeweils) wenigstens einen Freilauf auf.

Hierdurch kann in einer Ausführung vorteilhaft selbsttätig bzw. durch entsprechende Steuerung der zugeordneten elektrische Maschinen zwischen dem ersten und zweiten Betriebszustand der (jeweiligen) Schaltvorrichtung umgeschaltet und dadurch in einer Ausführung Bauraum und/oder -aufwand reduziert werden.

In einer Ausführung weisen eine oder mehrere der hier genannten Schaltvorrichtungen, insbesondere also die erste und/oder die zweite und/oder die bzw. eine oder mehrere der weitere(n) Schaltvorrichtung(en), (jeweils) wenigstens eine wahlweise bzw. aktiv, in einer Ausführung durch wenigstens einen, insbesondere hydraulischen, pneumatischen und/oder elektrischen, vorzugsweise elektromotorischen und/oder elektromagnetischen, Aktor, schaltbare Kupplung auf, vorzugsweise eine form- und/oder reibschlüssige Kupplung.

Hierdurch kann in einer Ausführung vorteilhaft gezielt und/oder wunschgemäß, in einer Ausführung durch entsprechendes Schalten der Kupplungen, zwischen dem ersten und zweiten Betriebszustand der (jeweiligen) Schaltvorrichtung umgeschaltet und dadurch in einer Ausführung der Betrieb verbessert werden.

In einer Weiterbildung weist die bzw. wenigstens eine der wahlweise bzw. aktiv schaltbare(n) Kupplung(en jeweils) wenigstens zwei Koppelelemente, in einer Ausführung Verzahnungen, insbesondere Zahnräder, auf, die miteinander in und außer Eingriff bringbar sind, wobei in einer Ausführung Übersetzungsgetriebe und Abtrieb durch die in Eingriff stehenden Koppelelemente bzw. Verzahnungen bzw. drehmomentübertragend wirkverbunden sind und diese Wirkverbindung zwischen Übersetzungsgetriebe und Abtrieb unterbrochen ist, wenn die Koppelelemente bzw. Verzahnungen außer Eingriff (gebracht) sind. Hierdurch kann in einer Ausführung ein zuverlässiger Eingriff realisiert werden.

In einer Weiterbildung weist die bzw. wenigstens eine der wahlweise bzw. aktiv schaltbare(n) Kupplung(en jeweils) wenigstens zwei Reibelemente auf, die miteinander in und außer Kontakt bringbar sind, wobei in einer Ausführung Übersetzungsgetriebe und Abtrieb durch die einander kontaktierenden Reibelemente drehmomentübertragend wirkverbunden sind und diese Wirkverbindung zwischen Übersetzungsgetriebe und Abtrieb unterbrochen ist, wenn die Reibelemente voneinander getrennt (worden) sind. Hierdurch kann in einer Ausführung ein sanfter Eingriff und/oder kompakter Bauraum realisiert werden.

In einer Ausführung weist das Antriebssystem eine Steuerung auf, die einen oder mehrere der hier genannten elektrischen Maschinen steuert und/oder eine oder mehrere der hier genannten wahlweise schaltbaren Kupplungen schaltet und/oder eine oder mehrere der hier genannten Schalteinrichtungen (in ihren ersten und/oder zweiten Betriebszustand um)schaltet bzw. hierzu eingerichtet ist bzw. verwendet wird, in einer Ausführung (jeweils) auf Basis eines, vorzugsweise sensorisch, erfassten Zustands des Antriebssystems und/oder der angekoppelten Maschine. Entsprechend werden in einer Ausführung auf Basis eines, vorzugsweise sensorisch, erfassten Zustands des Antriebssystems und/oder der angekoppelten Maschine eine oder mehrere der hier genannten elektrischen Maschinen gesteuert und/oder eine oder mehrere der hier genannten wahlweise schaltbaren Kupplungen geschaltet und/oder eine oder mehrere der hier genannten Schalteinrichtungen (in ihren ersten und/oder zweiten Betriebszustand um)geschaltet, insbesondere, um das Antriebssystem in einem vorgegebenen, in einer Ausführung gewählten, Betriebszustand zu betreiben.

Hierdurch kann in einer Ausführung vorteilhaft gezielt und/oder wunschgemäß, in einer Ausführung durch entsprechendes Schalten der Kupplungen bzw. Schalteinrichtungen und/oder Steuern der elektrischen Maschinen das Antriebssystem in einem vorgegebenen, in einer Ausführung gewählten, Betriebszustand betrieben und dadurch in einer Ausführung der Betrieb des Maschinensystems verbessert werden.

In einer Ausführung weisen eines oder mehrere der hier genannten Übersetzungsgetriebe (jeweils) ein oder mehrere Stirnradgetriebe, insbesondere Stirnradstufen, auf. Zusätzlich oder alternativ weist in einer Ausführung der Abtrieb ein oder mehrere Stirnradgetriebe, insbesondere Stirnradstufen, auf.

Dadurch können in einer Ausführung vorteilhafte Übersetzungen realisiert und/oder der Bauaufwand reduziert werden.

Zusätzlich oder alternativ weisen in einer Ausführung eines oder mehrere der hier genannten Übersetzungsgetriebe (jeweils) ein oder mehrere Planetengetriebe auf, insbesondere ein oder mehrere einstufige und/oder ein oder mehrere mehrstufige Planetengetriebe. Zusätzlich oder alternativ weist in einer Ausführung der Abtrieb ein oder mehrere Planetengetriebe auf, insbesondere ein oder mehrere einstufige und/oder ein oder mehrere mehrstufige Planetengetriebe.

Dadurch kann in einer Ausführung vorteilhafte der Bauraum reduziert werden.

In einer Ausführung reduzieren bzw. setzen eines oder mehrere der hier genannten Übersetzungsgetriebe (jeweils) eine elektrische-Maschinen-seitige Eingangsdrehzahl auf bzw. in eine kleinere abtriebsseitige Ausgangsdrehzahl (um) bzw. sind hierzu eingerichtet bzw. werden hierzu verwendet. In einer Ausführung weisen eines oder mehrere der hier genannten Übersetzungsgetriebe (jeweils) ein Vorgelege auf.

Hierdurch können in einer Ausführung vorteilhaft schnelle(re) und damit kompakte(re) elektrische Maschinen verwendet und so der Aufbau, insbesondere Bauraum, reduziert, und dabei trotzdem Reibungsverluste gering gehalten werden, indem Elemente der Maschineneinheit(en), die bei Betrieb entsprechend hohe Drehzahlen aufweisen, bei Nichtbedarf temporär abgekoppelt und dadurch insbesondere Reibungsverluste durch bzw. an schnell(er)laufende(n) Elementen bzw. deren Lagern reduziert und so der Betrieb, insbesondere Wirkungsgrad, des Antriebssystem verbessert werden.

In einer Ausführung erhöhen bzw. setzen eines oder mehrere der hier genannten Übersetzungsgetriebe (jeweils) eine elektrische-Maschinen-seitige Eingangsdrehzahl auf bzw. in eine größere abtriebsseitige Ausgangsdrehzahl (um) bzw. sind hierzu eingerichtet bzw. werden hierzu verwendet.

Hierdurch können in einer Ausführung vorteilhaft auch schnell(er)laufende angekoppelte Maschinen und/oder vorteilhaft Abtriebe mit höheren Drehzahlen betrieben werden.

In einer Ausführung schließen eine oder mehrere der Schalteinrichtungen in ihrem zweiten Betriebszustand Anschlussklemmen der entsprechenden bzw. zugeordneten elektrischen Maschine kurz, um dadurch einen aktiven Kurzschluss dieser elektrischen Maschine zu bewirken, bzw. sind hierzu eingerichtet.

Zusätzlich oder alternativ weisen eine oder mehrere der Schalteinrichtungen eine Leistungselektronik, in einer Weiterbildung eine Leistungselektronik eines Frequenzumrichters, auf. Zusätzlich oder alternativ sind eine oder mehrere der Schalteinrichtungen in eine Leistungselektronik, in einer Weiterbildung in eine Leistungselektronik eines Frequenzumrichters, integriert.

Hierdurch kann in einer Ausführung jeweils ein aktiver Kurzschluss besonders vorteilhaft, insbesondere sicher, zuverlässig, verlustarm und/oder einfach bewirkt werden.

In einer Ausführung können eine oder mehrere der Schalteinrichtungen auch als externe bzw. separate Einrichtungen, insbesondere zusätzlich zu Leistungselektronik und/oder Frequenzumrichter für die entsprechende elektrische Maschine, ausgebildet sein.

Hierdurch kann in einer Ausführung die Sicherheit erhöht und/oder eine Nachrüstung und/oder Wartung vereinfacht werden.

In einer Ausführung bewirkt wenigstens eine der Schalteinrichtungen in ihrem zweiten Betriebszustand einen aktiven Kurzschluss einer elektrischen Maschine von einer Maschineneinheit, falls das Übersetzungsgetriebe dieser Maschineneinheit eine Fehlfunktion aufweist und/oder falls die Schaltvorrichtung zur Unterbrechung der Wirkverbindung zwischen diesem Übersetzungsgetriebe und dem Abtrieb eine Fehlfunktion aufweist, bzw. ist hierzu eingerichtet.

Hierdurch kann in einer Ausführung vorteilhaft die Sicherheit erhöht werden.

Die vorliegende Erfindung ist besonderes für Schwerlastanwendungen geeignet. Entsprechend ist in einer Ausführung das Antriebssystem, insbesondere konstruktiv und/oder steuerungstechnisch, zum wenigstens temporären Betreiben mit einer Antriebsleistung von wenigstens 0,5 Megawatt (MW), vorzugsweise wenigstens 1 MW, der angekoppelten Maschine eingerichtet. Besonders vorteilhafte Anwendungen sind Mühlen, insbesondere Zementmühlen, Windenergieanlagen und PTI-PTO (PowerTakeln-PowerTakeOff)-Anwendungen, ohne dass die vorliegende Erfindung darauf beschränkt ist.

In einer Ausführung weist im Betrieb des Maschinensystems wenigstens eine der Schaltvorrichtungen ihren ersten Betriebszustand auf und dabei weist wenigstens eine andere der Schaltvorrichtungen zunächst ihren zweiten Betriebszustand und anschließend ihren ersten Betriebszustand auf. Mit anderen Worten schließt diese wenigstens eine andere Schaltvorrichtung bei bereits einer geschlossenen Schaltvorrichtung, so dass sukzessive auch die dieser wenigstens einen anderen Schaltvorrichtung zugeordnete Maschineneinheit den Abtrieb (mit) antreiben bzw. durch diesen (mit) angetrieben werden kann. Dadurch können in einer Ausführung vorteilhaft bedarfsgerecht zusätzliche Maschineneinheiten temporär gekoppelt und so bei Bedarf einerseits erforderliche Antriebsleistung zur Verfügung gestellt bzw. elektrische Leistung umgesetzt und andererseits vorher Reibungsverluste reduziert und so der Betrieb, insbesondere Wirkungsgrad, des Antriebssystem verbessert werden.

Zusätzlich oder alternativ weist in einer Ausführung im Betrieb des Antriebs- bzw. Maschinensystems wenigstens eine der Schaltvorrichtungen ihren zweiten Betriebszustand auf und dabei weist wenigstens eine andere der Schaltvorrichtungen zunächst ihren ersten Betriebszustand und anschließend ihren zweiten Betriebszustand auf. Mit anderen Worten öffnet diese wenigstens eine andere Schaltvorrichtung bei bereits einer geöffneten Schaltvorrichtung, so dass sukzessive auch die dieser wenigstens einen anderen Schaltvorrichtung zugeordnete Maschineneinheit abgekoppelt wird. Dadurch können in einer Ausführung vorteilhaft bedarfsgerecht nicht mehr benötigte Maschineneinheiten temporär abgekoppelt und so bei Bedarf einerseits erforderliche Antriebsleistung zur Verfügung gestellt bzw. elektrische Leistung umgesetzt und andererseits anschließend Reibungsverluste reduziert und so der Betrieb, insbesondere Wirkungsgrad, des Antriebssystem verbessert werden.

Zusätzlich oder alternativ weist in einer Ausführung im Betrieb des Maschinensystems wenigstens eine der Schalteinrichtungen ihren ersten Betriebszustand auf und dabei weist wenigstens eine andere der Schalteinrichtungen zunächst ihren zweiten Betriebszustand und anschließend ihren ersten Betriebszustand auf. Zusätzlich oder alternativ weist in einer Ausführung im Betrieb des Antriebs- bzw. Maschinensystems wenigstens eine der Schalteinrichtungen ihren zweiten Betriebszustand auf und dabei weist wenigstens eine andere der Schalteinrichtungen zunächst ihren ersten Betriebszustand und anschließend ihren zweiten Betriebszustand auf. Wie vorstehend beschrieben kann hierdurch das Antriebssystem in einer Ausführung vorteilhaft an einen Betriebszustand der angekoppelten Maschine und/oder des Antriebssystems angepasst werden.

Zusätzlich oder alternativ weist in einer Ausführung im Betrieb des Maschinensystems wenigstens eine der Schaltvorrichtungen ihren ersten Betriebszustand auf und dabei weist wenigstens eine der Schalteinrichtungen zunächst ihren zweiten Betriebszustand und anschließend ihren ersten Betriebszustand auf. Zusätzlich oder alternativ weist in einer Ausführung im Betrieb des Antriebs- bzw. Maschinensystems wenigstens eine der Schaltvorrichtungen ihren zweiten Betriebszustand auf und dabei weist wenigstens eine der Schalteinrichtungen zunächst ihren ersten Betriebszustand und anschließend ihren zweiten Betriebszustand auf. Dadurch können in einer Ausführung vorteilhaft bedarfsgerecht Maschineneinheiten zu- bzw. weggeschaltet und so bei Bedarf einerseits erforderliche Antriebsleistung zur Verfügung gestellt bzw. elektrische Leistung umgesetzt und andererseits anschließend bzw. vorher Verluste reduziert und so der Betrieb, insbesondere Wirkungsgrad, des Antriebssystem verbessert werden. Zusätzlich oder alternativ kann dadurch in einer Ausführung vorteilhaft die Sicherheit erhöht werden.

In einer Ausführung werden ein oder mehrere, insbesondere alle, Schritte des Verfahrens vollständig oder teilweise automatisiert durchgeführt, insbesondere durch die Steuerung.

Weitere Vorteile und Merkmale ergeben sich aus den Unteransprüchen und den Ausführungsbeispielen. Hierzu zeigt, teilweise schematisiert:
- Fig. 1:: ein Maschinensystem mit einem Antriebssystem nach einer Ausführung der vorliegenden Erfindung;
- Fig. 2:: das Maschinensystem mit dem Antriebssystem in axialer Ansicht und entsprechend der Schnittlinie II-II in Fig. 1; und
- Fig. 3:: ein Verfahren zum Betreiben des Maschinensystems nach einer Ausführung der vorliegenden Erfindung.

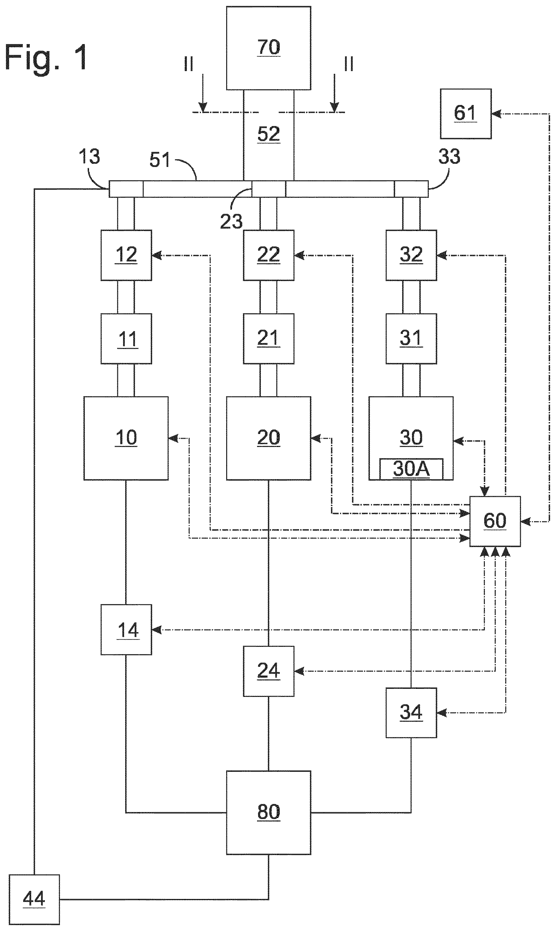

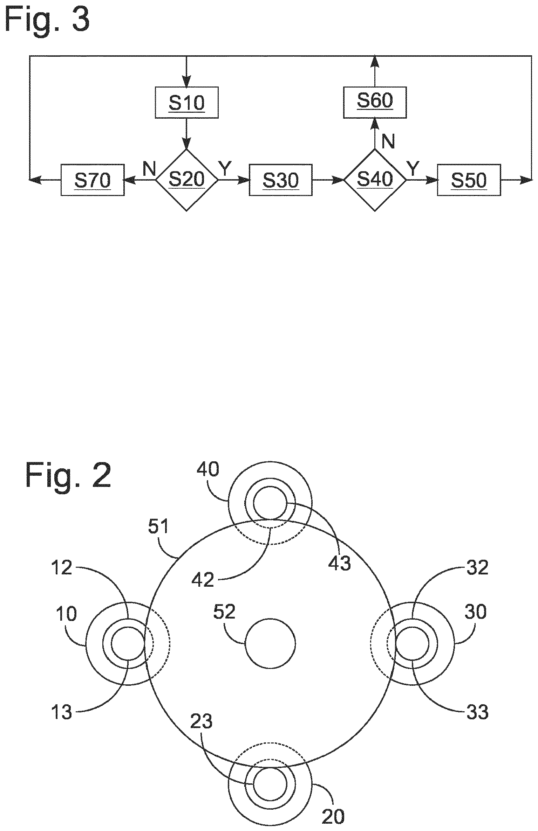

Fig. 1, 2 zeigen ein Maschinensystem mit einem Antriebssystem nach einer Ausführung der vorliegenden Erfindung in Draufsicht (Fig. 1) bzw. axialer Ansicht (Fig. 2).

Das Maschinensystem umfasst eine angekoppelte Maschine 70 und das Antriebssystem.

Die angekoppelte Maschine 70 kann in einer Ausführung eine Arbeitsmaschine oder eine Kraftmaschine sein oder in einer Ausführung alternierend temporär als Arbeits- und temporär als Kraftmaschine betrieben werden bzw. fungieren. Im Folgenden wird die Erfindung insbesondere anhand des Beispiels einer angekoppelten Arbeitsmaschine erläutert, ohne jedoch hierauf beschränkt zu sein.

Das Antriebssystem umfasst einen Abtrieb mit einem (Sammel)Zahnrad 51 und einer Abtriebswelle 52 zum Antreiben der bzw. durch die angekoppelte(n) Maschine 70. In nicht dargestellten Abwandlungen kann der Abtrieb auch ein mehrstufiges Getriebe aufweisen.

Das Antriebssystem umfasst exemplarisch vier Maschineneinheiten mit je einer elektrischen Maschine 10, 20, 30 bzw. 40 und einem durch diese antreibbaren bzw. diese antreibenden Übersetzungsgetriebe 11, 21, 31 (das vierte Übersetzungsgetriebe ist in den Ansichten der Fig. 1, 2 verdeckt) sowie vier Schaltvorrichtungen 12, 22, 32 bzw. 42.

Abtriebsseitig sind die Schaltvorrichtungen über Ritzel 13, 23, 33 bzw. 43 mit dem Zahnrad 51 gekoppelt, wobei in einer Ausführung die Ritzel dauerhaft in Eingriff mit dem Zahnrad 51 stehen und die Schaltvorrichtungen 12, 22, 32, 42 jeweils wenigstens einen Freilauf oder jeweils wenigstens eine wahlweise schaltbare Kupplung aufweisen, insbesondere hieraus bestehen können. In einer Abwandlung sind die Ritzel 13, 23, 33, 43 durch die entsprechend( zugeordneten Schaltvorrichtungen wahlweise in und außer Eingriff mit dem Zahnrad 51 bringbar. Gleichermaßen sind auch Mischformen möglich, bei denen die Schaltvorrichtungen 12, 22, 32, 42 unterschiedlich ausgestaltet sind, beispielsweise zwei Schaltvorrichtungen Freiläufe und zwei wahlweise schaltbare Kupplung aufweisen oder dergleichen.

Zusätzlich ist im Ausführungsbeispiel für jede der elektrischen Maschine 10, 20, 30 bzw. 40 jeweils eine Schalteinrichtung 14, 24, 34 bzw. 44 vorgesehen, durch die in einem ersten Betriebszustand der entsprechenden Schalteinrichtung die zugeordnete elektrische Maschine und eine Energieversorgungs- und/oder Energiespeichereinrichtung 80 elektrisch verbunden sind bzw. werden (d.h. 80-14-10; 80-24-20; 80-34-40; 80-44-40) und in einem zweiten Betriebszustand der entsprechenden Schalteinrichtung diese Verbindung mit der Energieversorgungs- und/oder Energiespeichereinrichtung 80 getrennt und ein aktiver Kurzschluss der zugeordneten elektrischen Maschine bewirkt ist bzw. wird.

Eine Steuerung 60 erhält von einem oder mehreren Sensoren, von denen ein Sensor 61 exemplarisch angedeutet ist, Informationen über den Zustand des Maschinensystems, in einer Ausführung des Antriebssystems. Auf Basis dieses sensorisch erfassten Zustands steuert die Steuerung 60 die elektrischen Maschinen 10, 20, 30, 40 und gegebenenfalls die wahlweise schaltbaren Kupplungen bzw. das Verschieben der Ritzel 13, 23, 33 bzw. 43 in bzw. außer Eingriff mit dem Zahnrad 51, was in Fig. 1 strich-punktiert angedeutet ist. Zusätzlich steuert die Steuerung 60 die Schalteinrichtungen, was in Fig. 1 ebenfalls strich-punktiert angedeutet ist.

Fig. 3 zeigt ein Verfahren zum Betreiben des Maschinensystems nach einer Ausführung der vorliegenden Erfindung, zunächst mit Fokus auf dem ersten Aspekt und einem motorischen Betrieb bzw. einer Arbeitsmaschine 70.

In einem Schritt S10 werden die elektrischen Maschinen 10 und 40, gegebenenfalls weiterhin, bestromt und die Schaltvorrichtungen 12, 42 in ihren ersten Betriebszustand gebracht oder dort gehalten, so dass durch diese Schaltvorrichtungen 12, 42 das mit der elektrischen Maschine 10 gekoppelte Übersetzungsgetriebe 11 und das mit der elektrischen Maschine 40 gekoppelte, in den Ansichten der Fig. 1, 2 verdeckte Übersetzungsgetriebe drehmomentübertragend mit dem (Zahnrad 51 des) Abtrieb(s) wirkverbunden sind.

Wird in Schritt S20 ein entsprechender Zustand des Maschinen- bzw. Antriebssystems festgestellt (S20: "Y"), beispielsweise eine Antriebsleistungsanforderung, die einen ersten Grenzwert überschreitet, oder dergleichen, wird die elektrische Maschine 20, gegebenenfalls weiterhin, bestromt und die Schaltvorrichtungen 22 in ihren ersten Betriebszustand gebracht oder dort gehalten, so dass durch diese Schaltvorrichtung 22 das mit der elektrischen Maschine 20 gekoppelte Übersetzungsgetriebe 21 drehmomentübertragend mit dem (Zahnrad 51 des) Abtrieb(s) wirkverbunden ist (Schritt S30).

Wird in Schritt S40 ein entsprechender Zustand des Maschinen- bzw. Antriebssystems festgestellt (S40: "Y"), beispielsweise eine Antriebsleistungsanforderung, die auch einen höheren zweiten Grenzwert überschreitet, oder dergleichen, wird auch die elektrische Maschine 30, gegebenenfalls weiterhin, bestromt und die Schaltvorrichtung 32 in ihren ersten Betriebszustand gebracht oder dort gehalten, so dass durch diese Schaltvorrichtung 32 das mit der elektrischen Maschine 30 gekoppelte Übersetzungsgetriebe 31 drehmomentübertragend mit dem (Zahnrad 51 des) Abtrieb(s) wirkverbunden ist (Schritt S50).

Somit befinden sich alle vier Schaltvorrichtungen in ihrem ersten Betriebszustand und das Zahnrad 51 bzw. die angekoppelte Maschine 70 werden von den vier bestromten elektrischen Maschinen 10, 20, 30, 40 gemeinsam angetrieben.

Anschließend kehrt das Verfahren zu Schritt S10 zurück.

Wird in Schritt S40 ein entsprechender Zustand des Maschinen- bzw. Antriebssystems festgestellt (S40: "N"), beispielsweise eine Antriebsleistungsanforderung, die zwar den ersten, aber nicht den höheren zweiten Grenzwert überschreitet, wird die elektrische Maschine 30 nicht, gegebenenfalls nicht mehr, bestromt und die Schaltvorrichtung 32 in ihren zweiten Betriebszustand gebracht oder dort gehalten, so dass durch diese Schaltvorrichtung 32 die oben genannte Wirkverbindung zwischen dem Übersetzungsgetriebe 31 und dem (Zahnrad 51 des) Abtrieb(s) unterbrochen ist (Schritt S60).

Somit befinden sich alle Schaltvorrichtungen außer der dritten Schaltvorrichtung 32 in ihrem ersten Betriebszustand und das Zahnrad 51 bzw. die angekoppelte Maschine 70 werden (nur) von den drei elektrischen Maschinen 10, 20, 40 gemeinsam angetrieben.

Anschließend kehrt das Verfahren zu Schritt S10 zurück.

Wird in Schritt S20 ein entsprechender Zustand des Maschinen- bzw. Antriebssystems festgestellt (S20: "N"), beispielsweise eine Antriebsleistungsanforderung, die auch den ersten Grenzwert nicht überschreitet, wird die elektrische Maschinen 20 nicht, gegebenenfalls nicht mehr, bestromt und die Schaltvorrichtung 22 in ihren zweiten Betriebszustand gebracht oder dort gehalten, so dass durch diese Schaltvorrichtung 22 die oben genannte Wirkverbindung zwischen dem Übersetzungsgetriebe 21 und dem (Zahnrad 51 des) Abtrieb(s) unterbrochen ist (Schritt S70).

Somit befinden sich alle Schaltvorrichtungen außer der zweiten und dritten Schaltvorrichtung 22, 32 in ihrem ersten Betriebszustand und das Zahnrad 51 bzw. die angekoppelte Maschine 70 werden (nur) von den zwei elektrischen Maschinen 10, 40 gemeinsam angetrieben.

Anschließend kehrt das Verfahren zu Schritt S10 zurück.

Das obige Ausführungsbeispiel dient der Illustration eines sukzessiven Koppelns bzw. Abkoppelns der zweiten Maschineneinheit 20, 21 und weiteren Maschineneinheit 30, 31 zur Realisierung eines Volllast-Betriebszustands (vgl. Fig. 3: S50), eines ersten Teillast-Betriebszustands (vgl. Fig. 3: S30) und eines zweiten Teillast-Betriebszustands (vgl. Fig. 3: S70) anhand eines einfachen Beispiels. Obwohl in der vorhergehenden Beschreibung exemplarische Ausführungen erläutert wurden, sei darauf hingewiesen, dass eine Vielzahl von Abwandlungen möglich ist.

So kann insbesondere analog zu der vorstehenden und nachfolgenden Erläuterung die angekoppelte Maschine 70 auch eine Kraftmaschine sein oder alternierend temporär als Arbeits- und temporär als Kraftmaschine betrieben werden bzw. fungieren. Auch dann können in vorstehend und nachfolgend beschriebener Weise eine oder mehrere der elektrischen Maschinen bzw. Maschineneinheiten sukzessive gekoppelt bzw. abgekoppelt und/oder mit der Energieversorgung verbunden bzw. aktiv kurzgeschlossen werden.

Zusätzlich oder alternativ zu einem vorstehend exemplarisch beschriebenen Abkoppeln mittels der Schaltvorrichtungen kann die Steuerung 60 analog eine oder mehrere der elektrischen Maschinen durch die der jeweiligen elektrischen Maschine zugeordnete(n) Schalteinrichtung(en) aktiv kurzschließen, indem sie entsprechende(n) Schalteinrichtung(en) von ihrem ersten in ihren zweiten Betriebszustand (um)schaltet. Umgekehrt kann die Steuerung 60 zusätzlich oder alternativ zu einem Koppeln mittels der Schaltvorrichtungen analog eine oder mehrere der elektrischen Maschinen durch die der jeweiligen elektrischen Maschine zugeordnete(n) Schalteinrichtung(en) (wieder) mit der Energieversorgungs- und/oder Energiespeichereinrichtung 80 elektrisch verbinden, indem sie entsprechende(n) Schalteinrichtung(en) von ihrem zweiten in ihren ersten Betriebszustand (um)schaltet.

So können beispielsweise bei der nachfolgend beschriebenen Abwandlung die Schaltvorrichtungen 12, 22, 32, 42 alle jeweils in ihrem ersten Betriebszustand bleiben oder auch entfallen und in Schritt S10 die elektrischen Maschinen 10 und 40, gegebenenfalls weiterhin, über die entsprechenden Schalteinrichtungen 14, 44 in deren ersten Betriebszustand bestromt werden.

Wird in Schritt S20 ein entsprechender Zustand des Maschinen- bzw. Antriebssystems festgestellt (S20: "Y"), beispielsweise eine Antriebsleistungsanforderung, die einen ersten Grenzwert überschreitet, oder dergleichen, wird auch die elektrische Maschine 20 über die ihr zugeordnete Schalteinrichtung 24, gegebenenfalls weiterhin, bestromt und hierzu die Schalteinrichtungen 24 in ihren ersten Betriebszustand gebracht oder dort gehalten (Schritt S30).

Wird in Schritt S40 ein entsprechender Zustand des Maschinen- bzw. Antriebssystems festgestellt (S40: "Y"), beispielsweise eine Antriebsleistungsanforderung, die auch einen höheren zweiten Grenzwert überschreitet, oder dergleichen, wird auch die elektrische Maschine 30 über die ihr zugeordnete Schalteinrichtung 34, gegebenenfalls weiterhin, bestromt und hierzu die Schalteinrichtung 34 in ihren ersten Betriebszustand gebracht oder dort gehalten (Schritt S50).

Somit befinden sich alle vier Schalteinrichtungen in ihrem ersten Betriebszustand und das Zahnrad 51 bzw. die angekoppelte Maschine 70 werden von den vier bestromten elektrischen Maschinen 10, 20, 30, 40 gemeinsam angetrieben.

Anschließend kehrt das Verfahren zu Schritt S10 zurück.

Wird in Schritt S40 ein entsprechender Zustand des Maschinen- bzw. Antriebssystems festgestellt (S40: "N"), beispielsweise eine Antriebsleistungsanforderung, die zwar den ersten, aber nicht den höheren zweiten Grenzwert überschreitet, wird die elektrische Maschine 30 nicht, gegebenenfalls nicht mehr, bestromt und hierzu die Schalteinrichtung 34 in ihren zweiten Betriebszustand gebracht oder dort gehalten, so dass durch diese Schalteinrichtung 34 die elektrische Maschine 30 aktiv kurzgeschlossen ist bzw. wird (Schritt S60). Sofern sie weiterhin drehmomentübertragend mit dem Abtrieb verbunden ist, da beispielsweise die Schaltvorrichtung 32 nicht vorhanden oder in ihrem ersten Betriebszustand ist, wird sie vorteilhaft verlustarm mitgeschleppt. Exemplarisch sind hierzu in Fig. 1 Anschlussklemmen 30A der elektrischen Maschine 30 angedeutet, die durch die Schalteinrichtung 34 kurzgeschlossen werden, um dadurch einen aktiven Kurzschluss dieser elektrischen Maschine zu bewirken.

Somit befinden sich alle Schalteinrichtungen außer der dritten Schalteinrichtung 34 in ihrem ersten Betriebszustand und das Zahnrad 51 bzw. die angekoppelte Maschine 70 werden (nur) von den drei elektrischen Maschinen 10, 20, 40 gemeinsam angetrieben.

Anschließend kehrt das Verfahren zu Schritt S10 zurück.

Wird in Schritt S20 ein entsprechender Zustand des Maschinen- bzw. Antriebssystems festgestellt (S20: "N"), beispielsweise eine Antriebsleistungsanforderung, die auch den ersten Grenzwert nicht überschreitet, wird die elektrische Maschinen 20 nicht, gegebenenfalls nicht mehr, bestromt und hierzu die Schalteinrichtung 24 in ihren zweiten Betriebszustand gebracht oder dort gehalten, so dass durch diese Schalteinrichtung 24 die elektrische Maschine 20 aktiv kurzgeschlossen ist bzw. wird (Schritt S70). Sofern sie weiterhin drehmomentübertragend mit dem Abtrieb verbunden ist, da beispielsweise die Schaltvorrichtung 22 nicht vorhanden oder in ihrem ersten Betriebszustand ist, wird sie vorteilhaft verlustarm mitgeschleppt.

Somit befinden sich alle Schalteinrichtungen außer der zweiten und dritten Schalteinrichtung 24, 34 in ihrem ersten Betriebszustand und das Zahnrad 51 bzw. die angekoppelte Maschine 70 werden (nur) von den zwei elektrischen Maschinen 10, 40 gemeinsam angetrieben.

Anschließend kehrt das Verfahren zu Schritt S10 zurück.

So wie vorstehend für die Abwandlung, in der (nur) die Schalteinrichtungen umgeschaltet werden, eine oder mehrere, insbesondere alle, Schaltvorrichtungen entfallen können, können umgekehrt für die eingangs erläuterte Variante, in der (nur) die Schaltvorrichtungen umgeschaltet werden, eine oder mehrere, insbesondere alle, Schalteinrichtungen entfallen. Insbesondere können also in Fig. 1, 2 eines oder mehrere der Elemente 12, 22, 32 und/oder 42 und/oder eines oder mehrere der Elemente 14, 24, 34 und/oder 44 entfallen.

In einer Abwandlung können die beiden vorstehend erläuterten Aspekte auch kombiniert sein bzw. werden.

So kann für ein oder mehrere der Maschineneinheiten sowohl eine Schaltvorrichtung als auch eine Schalteinrichtung vorgesehen sein und verwendet werden, insbesondere, indem durch die Schalteinrichtung die entsprechende elektrische Maschine zusätzlich zu einer, insbesondere versuchten, Unterbrechung der drehmomentübertragenden Wirkverbindung des Übersetzungsgetriebes aktiv kurzgeschlossen wird. Auf diese Weise kann in einer Ausführung die Sicherheit erhöht werden.

Zusätzlich oder alternativ können auch für ein oder mehrere der Maschineneinheiten nur eine Schaltvorrichtung und für ein oder mehrere andere der Maschineneinheiten nur eine Schalteinrichtung vorgesehen sein und verwendet werden, so dass die elektrischen Maschinen insbesondere bei Nichtbedarf entweder durch entsprechende Schalteinrichtungen aktiv kurzgeschlossen oder die drehmomentübertragende Wirkverbindung des zugeordneten Übersetzungsgetriebes durch die entsprechende Schaltvorrichtung unterbrochen wird. Auf diese Weise können vorteilhaft beispielsweise unterschiedlich aufgebaute und/oder genutzte elektrische Maschinen unterschiedlich "weggeschaltet" werden.

Es sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10; 20; 30; 40: Elektrische Maschine
- 30A: Anschlussklemmen
- 11; 21; 31: Übersetzungsgetriebe
- 12; 22; 32; 42: Schaltvorrichtung
- 13; 23; 33; 43: Ritzel
- 14; 24; 34; 44: Schalteinrichtung
- 51: Zahnrad
- 52: Abtriebswelle
- 60: Steuerung
- 61: Sensor
- 70: angekoppelte Maschine
- 80: Energieversorgungs- und/oder Energiespeichereinrichtung

## Patentansprüche

1. Antriebssystem zum Antreiben von einer und/oder durch eine angekoppelte Maschine (70), das
- einen Abtrieb (51, 52) zum Antreiben von der und/oder durch die angekoppelte Maschine;
- eine erste Maschineneinheit mit wenigstens einer elektrischen Maschine (10) zum Antreiben von dem und/oder durch den Abtrieb; und
- eine zweite Maschineneinheit mit wenigstens einer elektrischen Maschine (20) zum Antreiben von dem und/oder durch den Abtrieb;
aufweist, wobei
a) die erste Maschineneinheit ein Übersetzungsgetriebe (11), das dazu eingerichtet ist, durch die elektrische Maschine (10) der ersten Maschineneinheit angetrieben zu werden und/oder diese elektrische Maschine (10) anzutreiben, und das Antriebssystem eine erste Schaltvorrichtung (12) aufweist, die derart eingerichtet ist, dass durch sie
- in einem ersten Betriebszustand der ersten Schaltvorrichtung das Übersetzungsgetriebe der ersten Maschineneinheit und der Abtrieb drehmomentübertragend wirkverbunden sind; und
- in einem zweiten Betriebszustand der ersten Schaltvorrichtung diese Wirkverbindung zwischen dem Übersetzungsgetriebe der ersten Maschineneinheit und dem Abtrieb unterbrochen ist; und/oder
b) das Antriebssystem eine erste Schalteinrichtung (14) aufweist, die derart eingerichtet ist, dass durch sie
- in einem ersten Betriebszustand der ersten Schalteinrichtung die elektrische Maschine (10; 20) der einen von der ersten oder zweiten Maschineneinheit und eine Energieversorgungs- und/oder Energiespeichereinrichtung (80) elektrisch verbunden sind; und
- in einem zweiten Betriebszustand der ersten Schalteinrichtung diese Verbindung mit der Energieversorgungs- und/oder Energiespeichereinrichtung getrennt und ein aktiver Kurzschluss dieser elektrischen Maschine (10; 20) der einen von der ersten oder zweiten Maschineneinheit bewirkt ist.

2. Antriebssystem nach Anspruch 1, **dadurch gekennzeichnet, dass**
a) die zweite Maschineneinheit ein Übersetzungsgetriebe (21), das dazu eingerichtet ist, durch die elektrische Maschine (20) der zweiten Maschineneinheit angetrieben zu werden und/oder diese elektrische Maschine (20) anzutreiben, und das Antriebssystem
- eine zweite Schaltvorrichtung (22) aufweist, die derart eingerichtet ist, dass durch sie
- in einem ersten Betriebszustand der zweiten Schaltvorrichtung das Übersetzungsgetriebe der zweiten Maschineneinheit und der Abtrieb drehmomentübertragend wirkverbunden sind; und
- in einem zweiten Betriebszustand der zweiten Schaltvorrichtung diese Wirkverbindung zwischen dem Übersetzungsgetriebe der zweiten Maschineneinheit und dem Abtrieb unterbrochen ist; und/oder
b) das Antriebssystem eine zweite Schalteinrichtung (24) aufweist, die derart eingerichtet ist, dass durch sie
- in einem ersten Betriebszustand der zweiten Schalteinrichtung die elektrische Maschine (20; 10) der anderen von der ersten oder zweiten Maschineneinheit und eine Energieversorgungs- und/oder Energiespeichereinrichtung (80) elektrisch verbunden sind; und
- in einem zweiten Betriebszustand der zweiten Schalteinrichtung diese Verbindung mit der Energieversorgungs- und/oder Energiespeichereinrichtung getrennt und ein aktiver Kurzschluss dieser elektrischen Maschine (20; 10) dieser anderen von der ersten oder zweiten Maschineneinheit bewirkt ist.

3. Antriebssystem nach Anspruch 2, **gekennzeichnet durch**
a) wenigstens eine weitere Maschineneinheit mit wenigstens einer elektrischen Maschine (30; 40) zum Antreiben von dem und/oder durch den Abtrieb, wobei diese weitere Maschineneinheit ein Übersetzungsgetriebe (31), das dazu eingerichtet ist, durch die elektrische Maschine dieser weiteren Maschineneinheit angetrieben zu werden und/oder diese elektrische Maschine anzutreiben, und das Antriebssystem eine weitere Schaltvorrichtung (32; 42) aufweist, die derart eingerichtet ist, dass durch sie
- in einem ersten Betriebszustand dieser weiteren Schaltvorrichtung das Übersetzungsgetriebe dieser weiteren Maschineneinheit und der Abtrieb drehmomentübertragend wirkverbunden sind; und
- in einem zweiten Betriebszustand dieser weiteren Schaltvorrichtung diese Wirkverbindung zwischen dem Übersetzungsgetriebe dieser weiteren Maschineneinheit und dem Abtrieb unterbrochen ist; und/oder
b) wenigstens eine weitere Schalteinrichtung (34; 44), die derart eingerichtet ist, dass durch sie
- in einem ersten Betriebszustand dieser weiteren Schalteinrichtung die elektrische Maschine (30; 40) dieser oder einer anderen weiteren Maschineneinheit des Antriebssystems, die diese elektrische Maschine (30; 40) zum Antreiben von dem und/oder durch den Abtrieb aufweist, und eine Energieversorgungs- und/oder Energiespeichereinrichtung (80) elektrisch verbunden sind; und
- in einem zweiten Betriebszustand der weiteren Schalteinrichtung diese Verbindung mit der Energieversorgungs- und/oder Energiespeichereinrichtung getrennt und ein aktiver Kurzschluss dieser elektrischen Maschine dieser weiteren Maschineneinheit bewirkt ist.

4. Antriebssystem nach einem der vorhergehenden Ansprüche, **dadurch gekennzeichnet, dass** es derart eingerichtet ist, dass
A)
- in wenigstens einem Betriebszustand des Antriebssystems die erste Schaltvorrichtung ihren ersten Betriebszustand und die erste Schalteinrichtung ihren ersten Betriebszustand und
- in wenigstens einem anderen Betriebszustand des Antriebssystems
- die erste Schaltvorrichtung ihren zweiten Betriebszustand und die erste Schalteinrichtung ihren ersten Betriebszustand oder
- die erste Schaltvorrichtung ihren ersten Betriebszustand und die erste Schalteinrichtung ihren zweiten Betriebszustand oder
- die erste Schaltvorrichtung ihren zweiten Betriebszustand und die erste Schalteinrichtung ihren zweiten Betriebszustand
aufweisen; und/oder
B)
- in wenigstens einem Betriebszustand des Antriebssystems die erste Schaltvorrichtung ihren ersten Betriebszustand und die zweite Schaltvorrichtung ihren ersten Betriebszustand und
- in wenigstens einem anderen Betriebszustand des Antriebssystems
- die erste Schaltvorrichtung ihren zweiten Betriebszustand und die zweite Schaltvorrichtung ihren ersten Betriebszustand oder
- die erste Schaltvorrichtung ihren ersten Betriebszustand und die zweite Schaltvorrichtung ihren zweiten Betriebszustand oder
- die erste Schaltvorrichtung ihren zweiten Betriebszustand und die zweite Schaltvorrichtung ihren zweiten Betriebszustand
aufweisen; und/oder
C)
- in wenigstens einem Betriebszustand des Antriebssystems die erste Schalteinrichtung ihren ersten Betriebszustand und die zweite Schalteinrichtung ihren ersten Betriebszustand und
- in wenigstens einem anderen Betriebszustand des Antriebssystems
- die erste Schalteinrichtung ihren zweiten Betriebszustand und die zweite Schalteinrichtung ihren ersten Betriebszustand oder
- die erste Schalteinrichtung ihren ersten Betriebszustand und die zweite Schalteinrichtung ihren zweiten Betriebszustand oder
- die erste Schalteinrichtung ihren zweiten Betriebszustand und die zweite Schalteinrichtung ihren zweiten Betriebszustand
aufweisen; und/oder
D)
- in wenigstens einem Betriebszustand des Antriebssystems die erste Schaltvorrichtung ihren ersten Betriebszustand und die zweite Schaltvorrichtung ihren ersten Betriebszustand und die weitere Schaltvorrichtung ihren ersten oder zweiten Betriebszustand und
- in wenigstens einem anderen Betriebszustand des Antriebssystems
- die erste Schaltvorrichtung ihren zweiten Betriebszustand und die zweite Schaltvorrichtung ihren ersten Betriebszustand und die weitere Schaltvorrichtung ihren ersten oder zweiten Betriebszustand oder
- die erste Schaltvorrichtung ihren ersten Betriebszustand und die zweite Schaltvorrichtung ihren zweiten Betriebszustand und die weitere Schaltvorrichtung ihren ersten oder zweiten Betriebszustand oder
- die erste Schaltvorrichtung ihren zweiten Betriebszustand und die zweite Schaltvorrichtung ihren zweiten und die weitere Schaltvorrichtung ihren ersten oder zweiten Betriebszustand aufweisen; und/oder
E)
- in wenigstens einem Betriebszustand des Antriebssystems die erste Schalteinrichtung ihren ersten Betriebszustand und die zweite Schalteinrichtung ihren ersten Betriebszustand und die weitere Schalteinrichtung ihren ersten oder zweiten Betriebszustand und
- in wenigstens einem anderen Betriebszustand des Antriebssystems
- die erste Schalteinrichtung ihren zweiten Betriebszustand und die zweite Schalteinrichtung ihren ersten Betriebszustand und die weitere Schalteinrichtung ihren ersten oder zweiten Betriebszustand oder
- die erste Schalteinrichtung ihren ersten Betriebszustand und die zweite Schalteinrichtung ihren zweiten Betriebszustand und die weitere Schalteinrichtung ihren ersten oder zweiten Betriebszustand oder
- die erste Schalteinrichtung ihren zweiten Betriebszustand und die zweite Schalteinrichtung ihren zweiten Betriebszustand und die weitere Schalteinrichtung ihren ersten oder zweiten Betriebszustand
aufweisen.

5. Antriebssystem nach einem der vorhergehenden Ansprüche, **dadurch gekennzeichnet, dass** wenigstens eine der Schaltvorrichtungen wenigstens einen Freilauf aufweist.

6. Antriebssystem nach einem der vorhergehenden Ansprüche, **dadurch gekennzeichnet, dass** wenigstens eine der Schaltvorrichtungen wenigstens eine wahlweise schaltbare Kupplung aufweist.

7. Antriebssystem nach einem der vorhergehenden Ansprüche, **dadurch gekennzeichnet, dass** wenigstens eines der Übersetzungsgetriebe und/oder der Abtrieb wenigstens ein Stirnradgetriebe und/oder wenigstens ein Planetengetriebe aufweist und/oder derart eingerichtet ist, dass eine Eingangsdrehzahl der angekoppelten elektrischen Maschine in eine kleinere oder größere abtriebsseitige Ausgangsdrehzahl umgesetzt wird.

8. Antriebssystem nach einem der vorhergehenden Ansprüche, **dadurch gekennzeichnet, dass** wenigstens eine der Schalteinrichtungen dazu eingerichtet ist, in ihrem zweiten Betriebszustand Anschlussklemmen (30A) der elektrischen Maschine kurzzuschließen, um dadurch einen aktiven Kurzschluss dieser elektrischen Maschine zu bewirken.

9. Antriebssystem nach einem der vorhergehenden Ansprüche, **dadurch gekennzeichnet, dass** wenigstens eine der Schalteinrichtungen eine Leistungselektronik, insbesondere eines Frequenzumrichters, aufweist oder in diese integriert ist.

10. Antriebssystem nach einem der vorhergehenden Ansprüche, **dadurch gekennzeichnet, dass** wenigstens eine der Schalteinrichtungen dazu eingerichtet ist, dass sie in ihrem zweiten Betriebszustand einen aktiven Kurzschluss einer elektrischen Maschine von einer Maschineneinheit bewirkt, falls das Übersetzungsgetriebe dieser Maschineneinheit eine Fehlfunktion aufweist und/oder falls die Schaltvorrichtung zur Unterbrechung der Wirkverbindung zwischen diesem Übersetzungsgetriebe und dem Abtrieb eine Fehlfunktion aufweist.

11. Antriebssystem nach einem der vorhergehenden Ansprüche, **gekennzeichnet durch** eine Steuerung (60) zum Steuern wenigstens einer der elektrischen Maschinen und/oder Schalten wenigstens einer der wahlweise schaltbaren Kupplungen und/oder wenigstens einer der Schalteinrichtungen, insbesondere zum Steuern bzw. Schalten auf Basis eines, insbesondere sensorisch, erfassten Zustands des Antriebssystems und/oder der angekoppelten Maschine.

12. Antriebssystem nach einem der vorhergehenden Ansprüche, **dadurch gekennzeichnet, dass** es zum Betreiben mit einer Antriebsleistung der angekoppelten Maschine von wenigstens 0,5 MW eingerichtet ist.

13. Maschinensystem mit einer angekoppelten Maschine (70) und einem Antriebssystem nach einem der vorhergehenden Ansprüche zum Antreiben der und/oder durch die angekoppelte Maschine, insbesondere mit einer Antriebsleistung von wenigstens 0,5 MW.

14. Verfahren zum Betreiben eines Maschinensystems nach dem vorhergehenden Anspruch, wobei
- in einem Motor-Betriebszustand des Antriebssystems, insbesondere in einem Volllast-Betriebszustand, die erste Schaltvorrichtung (12) und/oder die erste Schalteinrichtung (14) ihren ersten Betriebszustand, insbesondere die zweite und/oder die weitere Schaltvorrichtung (22; 32; 42) und/oder die zweite und/oder die weitere Schalteinrichtung (24; 34; 44) ihren ersten Betriebszustand, aufweist und die elektrische Maschine (10) der ersten Maschineneinheit und die elektrische Maschine (20) der zweiten Maschineneinheit, insbesondere die elektrische Maschine der ersten Maschineneinheit und die elektrische Maschine der zweiten Maschineneinheit und die elektrische Maschine (30; 40) der weiteren Maschineneinheit, den Abtrieb gemeinsam antreiben; und/oder
- in einem Generator-Betriebszustand des Antriebssystems, insbesondere in einem Volllast-Betriebszustand, die erste Schaltvorrichtung (12) und/oder die erste Schalteinrichtung (14) ihren ersten Betriebszustand, insbesondere die zweite und/oder die weitere Schaltvorrichtung (22; 32; 42) und/oder die zweite und/oder die weitere Schalteinrichtung (24; 34; 44) ihren ersten Betriebszustand, aufweist und die elektrische Maschine (10) der ersten Maschineneinheit und die elektrische Maschine (20) der zweiten Maschineneinheit, insbesondere die elektrische Maschine der ersten Maschineneinheit und die elektrische Maschine der zweiten Maschineneinheit und die elektrische Maschine (30; 40) der weiteren Maschineneinheit, durch den Abtrieb gemeinsam angetrieben werden.

15. Verfahren nach dem vorhergehenden Anspruch, wobei
- zum Umschalten von dem einen Motor-Betriebszustand in einen anderen Motor-Betriebszustand des Antriebssystems, insbesondere einen Teillast-Betriebszustand, in dem weiterhin wenigstens eine der Maschineneinheiten den Abtrieb antreibt, wenigstens eine der Schaltvorrichtungen (12; 22; 32; 42) von ihrem ersten in ihren zweiten Betriebszustand und/oder wenigstens eine der Schalteinrichtungen (14; 24; 34; 44) von ihrem ersten in ihren zweiten Betriebszustand überführt wird; und/oder
- zum Umschalten von dem einen Generator-Betriebszustand in einen anderen Generator-Betriebszustand des Antriebssystems, insbesondere einen Teillast-Betriebszustand, in dem weiterhin wenigstens eine der Maschineneinheiten durch den Abtrieb angetrieben wird, wenigstens eine der Schaltvorrichtungen (12; 22; 32; 42) von ihrem ersten in ihren zweiten Betriebszustand und/oder wenigstens eine der Schalteinrichtungen (14; 24; 34; 44) von ihrem ersten in ihren zweiten Betriebszustand überführt wird.

16. Verfahren nach dem vorhergehenden Anspruch, wobei
- zum Umschalten von dem einen oder anderen Motor-Betriebszustand in einen zusätzlichen Motor-Betriebszustand des Antriebssystems, insbesondere einen Teillast-Betriebszustand, in dem wenigstens eine der Maschineneinheiten den Abtrieb antreibt, wenigstens eine andere der Schaltvorrichtungen von ihrem ersten in ihren zweiten Betriebszustand und/oder wenigstens eine andere der Schalteinrichtungen von ihrem ersten in ihren zweiten Betriebszustand überführt wird; und/oder
- zum Umschalten von dem einen oder anderen Generator-Betriebszustand in einen zusätzlichen Generator-Betriebszustand des Antriebssystems, insbesondere einen Teillast-Betriebszustand, in dem wenigstens eine der Maschineneinheiten durch den Abtrieb angetrieben wird, wenigstens eine andere der Schaltvorrichtungen von ihrem ersten in ihren zweiten Betriebszustand und/oder wenigstens eine andere der Schalteinrichtungen von ihrem ersten in ihren zweiten Betriebszustand überführt wird.

17. Verfahren nach einem der vorhergehenden Ansprüche, **dadurch gekennzeichnet, dass** auf Basis eines, insbesondere sensorisch, erfassten Zustands des Antriebssystems und/oder der angekoppelten Maschine wenigstens eine der elektrischen Maschinen gesteuert und/oder wenigstens eine der wahlweise schaltbaren Kupplungen und/oder wenigstens eine der Schalteinrichtungen geschaltet wird.
